# EUROPÄISCHE PATENTANMELDUNG

(11) **EP 4 295 691 A1**
(43) Veröffentlichungstag der Anmeldung: **27.12.2023**
(21) Anmeldenummer: 23172701.7
(22) Anmeldetag: 11.05.2023
(51) Int. Cl.: A21B 1/33

(54) **HOLZBEFEUERTER BACKOFEN**

(30) Priorität: 23.06.2022 DE 102022206343
(71) Anmelder: Werner & Pfleiderer Lebensmitteltechnik GmbH, 91550 Dinkelsbühl (DE)
(72) Erfinder: Dannenhauer, Bernd, 91550 Dinkelsbühl (DE); Blümel, Frank, 91614 Mönchsroth (DE)
(74) Vertreter: Rau, Schneck & Hübner Patentanwälte Rechtsanwälte PartGmbB

(57) **Zusammenfassung**

Ein holzbefeuerter Backofen (1) hat mindestens einen Backraum (2 bis 4) mit mindestens einer Oberhitze-Steinplatte (5) und mindestens einer Unterhitze-Steinplatte (6). Ein holzbefeuerter Brenner (7) dient zum Aufheizen der Steinplatten (5, 6) über Verbrennungsgase während mindestens einer Aufheizphase. Über einen Verbrennungsgas-Kreislauf (8) werden die Verbrennungsgase vom Brenner (7) hin zum Backraum (2 bis 4) und von diesem zurück zum Brenner (7) geführt. Ein Umwälz-Ventilator (29) dient zum Führen der Verbrennungsgase durch den Verbrennungsgas-Kreislauf (8). Ein Abluftkamin (30) dient zum Abführen von Abgasen aus dem Verbrennungsgas-Kreislauf (8). Es resultiert ein holzbefeuerter Backofen mit verbesserter Energieeffizienz.

## Beschreibung

Die Erfindung betrifft einen holzbefeuerten Backofen.

Ein derartiger Backofen ist vom Markt her bekannt.

Es eine Aufgabe der vorliegenden Erfindung, eine Energieeffizienz eines derartigen Backofens zu verbessern.

Die DE 10 2008 012 663 B4 offenbart ein Verfahren zur Herstellung von Backwaren in einem Steingutbackofen.

Diese Aufgabe ist erfindungsgemäß gelöst durch einen Backofen mit den im Anspruch 1 angegebenen Merkmalen.

Erfindungsgemäß wurde erkannt, dass eine Verbrennungsgas-Kreislaufführung zwischen einen Brenner und mindestens einen Backraum, die in Verbindung mit insbesondere gasbefeuerten Etagenbacköfen bereits vom Markt her bekannt ist, überraschenderweise auch bei einem holzbefeuerten Backofen zum Einsatz kommen kann, der vor dem Backen während der mindestens einen Aufheizphase, regelmäßig aber nicht während des Backens beheizt wird. Der Backofen ist also so ausgelegt, dass er überwiegend oder ausschließlich während Backpausen, in denen der Backofen nicht zum Backen genutzt wird, aufgeheizt wird. Bei einem solchen holzbefeuerten Backofen werden die Verbrennungsgase direkt durch die Backräume geführt, also nicht über Wärmetauscher-Heizregister.

Bei dem holzbefeuerten Brenner kann es sich um einen Pelletsbrenner handeln.

Der holzbefeuerte Backofen kann zur gewerblichen und insbesondere handwerklichen Nutzung ausgelegt sein. Auch eine Ausgestaltung des holzbefeuerten Backofens zur industriellen Nutzung ist möglich.

Eine Anordnung des Umwälz-Ventilators nach Anspruch 2 hat sich zur Kreislaufführung der Verbrennungsgase als besonders vorteilhaft herausgestellt. Die Verbrennungsgase werden dann durch den Umwälz-Ventilator vom mindestens einen Backraum her angesaugt, was eine Verbrennungsgas-Führung durch die Backräume vergleichmäßigt.

Eine verstellbare Drosselklappe nach Anspruch 3 ermöglicht es, einen Verbrennungsgasdruck im Verbrennungsgas-Kreislauf und insbesondere einen Abluftanteil von Verbrennungsgasen, die aus dem Verbrennungsgas-Kreislauf über den Abluft-Kamin abgeführt werden, vorzugeben. Hierüber und über eine Leistung des Brenners kann eine Temperaturvorgabe der Verbrennungsgase im Verbrennungsgas-Kreislauf und insbesondere in den Backräumen erfolgen. Die verstellbare Drosselklappe kann im Bereich einer Mündung des Abluftkamins in den Verbrennungsgas-Kreislauf angeordnet sein.

Eine steuerbare Ausführung der Drosselklappe nach Anspruch 4 ermöglicht eine automatische oder halbautomatische Vorgabe einer Drosselklappenstellung im Abluftkamin. Die Drosselklappe kann dann anhand beispielsweise eines softwaregesteuerten Backprogramms verstellt werden.

Ein Drucksensor nach Anspruch 5 ermöglicht eine regelbare Ausführung der Drosselklappe im Abluftkamin. Insbesondere eine Unterdruck-Regelung eines Verbrennungsgasdrucks im Verbrennungsgas-Kreislauf über eine Drosselklappenstellung ist möglich, sodass während der Aufheizphase ein vorgegebener Unterdruck im Verbrennungsgas-Kreislauf vorliegt, beispielsweise ein konstanter Unterdruck oder ein Unterdruck, der einer vorgegebenen Sollwert-Kurve folgt.

Eine Absperrklappe-Ausführung nach Anspruch 6 ermöglicht es, einzelne Backräume vom Verbrennungsgas-Kreislauf abzusperren, falls diese beim Backen nicht genutzt werden. Über eine Drosselstellungsvorgabe der jeweiligen Absperrklappe kann auch ein Verbrennungsgasanteil des insgesamt durch den Verbrennungsgas-Kreislauf geführten Verbrennungsgases vorgegeben werden, welches durch einen bestimmten Backraum strömt. Dies kann zur Optimierung einer Energieeffizienz des Backofens genutzt werden, damit beispielsweise alle Backräume unabhängig von ihrer Strömungsweg-Entfernung vom Brenner eine vorgegebene und insbesondere die gleiche Backraumtemperatur erreichen. Eine entsprechende Ausführung mit mindestens einer steuerbaren Absperrklappe kann auch bei einem Backofen mit genau einem Backraum zum Einsatz kommen.

Eine weitere Absperrklappe kann in einem Bypass-Kanalabschnitt des Verbrennungsgas-Kreislaufs zwischen einer Haupt-Zuführleitung zum mindestens einen Backraum und einer Haupt-Abführleitung vom mindestens einem Backraum angeordnet sein. Durch Zusammenwirken der mindestens einen Backraum-Absperrklappe und einer derartigen Bypass-Absperrklappe kann beispielsweise der komplette Verbrennungsgas-Kreislauf abgesperrt werden, sodass mangels Luftzufuhr der holzbefeuerte Brenner erlischt, also in gewünschter Weise inaktiv wird. Über den Bypass-Kanalabschnitt kann im Zusammenspiel mit einer dann auch Drosselstellungen einnehmbaren Absperrklappe ein Anteil des Verbrennungsgases im Verbrennungsgas-Kreislauf vorgegeben werden, der nicht durch die Backräume strömt, sondern die Backräume überbrückt, also bypasst. Dies kann zur Temperatursteuerung einer Backtemperatur in mindestens einem Backraum genutzt werden.

Eine Ausführung nach Anspruch 7 ermöglicht weitere Varianten eines gesteuerten/geregelten Betriebs des holzbefeuerten Backofens, insbesondere entsprechend eines ausgewählten Backprogramms.

Eine Verbrennungsgas-Führung nach Anspruch 8 verbessert eine Energieeffizienz des Backofens, da jedenfalls eine der Steinplatten beidseitig, nämlich über die Hinweg-Klappenseite und die gegenüberliegende Rückweg-Klappenseite, mit dem Verbrennungsgas in thermischem Kontakt steht und somit effektiver aufgeheizt wird. Bei dieser effektiver aufgeheizten Steinplatte kann es sich um eine Oberhitze-Steinplatte handeln. Die Hinweg-Plattenseite kann dem Backraum zugewandt sein, was die Energieeffizienz der Verbrennungsgas-Umströmung der beidseitig umströmten Steinplatte zusätzlich verbessert. Eine Umlenkung der Verbrennungsgas-Führung kann vom Führungs-Hinweg zum Führungs-Rückweg direkt im Bereich einer Stirnseite der Steinplatte erfolgen, was die Wärmeübertragung vom Verbrennungsgas auf die Steinplatte nochmals verbessert.

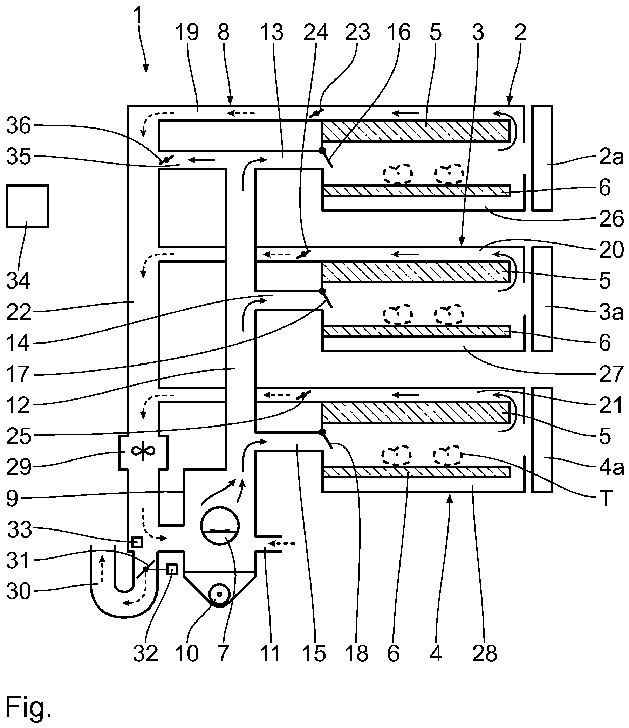

Ein Ausführungsbeispiel der Erfindung wird nachfolgend anhand der Zeichnung erläutert.

Die einzige Figur zeigt schematisch Hauptkomponenten eines Verbrennungsgas-Kreislaufes in einem holzbefeuerten Backofen.

Ein holzbefeuerter Backofen 1 hat mehrere etagenweise übereinander angeordnete Backräume 2, 3, 4 mit jeweils einer Oberhitze-Steinplatte 5 und jeweils einer Unterhitze-Steinplatte 6.

Die jeweilige Unterhitze-Steinplatte 6 hat weniger als ein Drittel einer Masse der jeweiligen Oberhitze-Steinplatte 5.

Zum Aufheizen der Steinplatten 5, 6 dient ein holzbefeuerter Brenner 7 in Form eines Pelletbrenners. Das Aufheizen der Steinplatten 5, 6 über den Brenner 7 erfolgt durch Verbrennungsgase während einer Aufheizphase des Backofens 1. Die Verbrennungsgase werden vom Brenner 7 hin zu den Backräumen 2 bis 4 und von diesen zurück zum Brenner 7 über einen Verbrennungsgas-Kreislauf 8 geführt. Während der Aufheizphase durchtreten die vom Brenner 7 erzeugten Verbrennungsgase also direkt die Backräume 2 bis 4, in denen nach der Aufheizphase zu backende Teiglinge T angeordnet werden können, die in der Figur gestrichelt in den Backräumen 2 bis 4 angedeutet sind. In diesem Verbrennungsgas-Kreislauf 8 ist im Bereich eines Bodens eines Brenner-Gehäuseabschnitts 9 eine Asche-Abfördereinheit 10 angeordnet, die als Schneckenförderer ausgeführt sein kann. Strömungswege des vom Brenner 7 weiteren Komponenten zugeführten Verbrennungsgases sind mit durchgezogenen Pfeilen und Strömungswege des dem Brenner 7 zugeführten Gases oder aus dem Kreislauf 8 abgeführten Gases sind mit gestrichelten Pfeilen angedeutet.

In den Brenner-Gehäuseabschnitt 9 mündet ein Frischluftkanal 11 ein. Über eine Haupt-Zuführleitung 12 und den Backräumen 2 bis 4 zugeordnete Backraum-Zufuhrleitungen 13, 14, 15, die wiederum Teile des Verbrennungsgas-Kreislaufs 8 sind, steht der Brenner-Gehäuseabschnitt 9 mit einem Inneren der Backräume 2, 3 und 4 in Fluidverbindung. Jeweils bei einer Einmündung der Backraum-Zuführleitungen 13 bis 15 in die Backräume 2 bis 4 ist eine dem jeweiligen Backraum zugeordnete zuführseitige Backraum-Absperrklappe 16, 17, 18 angeordnet, über die ein Fluidweg zwischen den Backraum-Zuführleitungen 13 bis 15 und den Innenräumen der zugehörigen Backräume 2 bis 4 abgesperrt werden kann.

Im Bereich der Backräume 2 werden die Verbrennungsgase nach Durchtritt der jeweiligen, dann geöffneten Klappe 16 bis 18 so zugeführt, dass die Verbrennungsgase auf einem Führungs-Hinweg durch den Backraum 2 bis 4 selbst, also zwischen einer Unterseite der jeweiligen Oberhitze-Steinplatte 5 und einer Oberseite der jeweiligen Unterhitze-Steinplatte 6, und auf einem Führungs-Rückweg über eine Rückweg-Plattenseite, nämlich über eine Oberseite der jeweiligen Oberhitze-Steinplatte 5 geführt sind.

Die Verbrennungsgas-Führung ist vom Führungs-Hinweg zum Führungs-Rückweg direkt im Bereich einer in der Figur rechts dargestellten Stirnseite der Steinplatte um 180 ° umgelenkt. Hierdurch ist eine Wärmeübertragungseffizienz des Verbrennungsgases auf die jeweilige Oberhitze-Steinplatte 5 verbessert. Auch die entsprechenden Stirnseitenbereiche der Unterhitze-Steinplatten 6 sind zwischen den Backräumen einerseits und den Kanalabschnitten 26, 27, 28 andererseits frei, sodass auch ein Wärmekontakt des Verbrennungsgases mit diesen Stirnseitenbereichen der Unterhitze-Steinplatten 6 möglich ist.

Diese vom Verbrennungsgas angeströmten Stirnseitenbereiche der Oberhitze-Steinplatten 5 und der Unterhitze-Steinplatten 6 sind benachbart zu Backraumtüren 2a, 3a, 4a der Backräume 2 bis 4 angeordnet.

Über Backraum-Abführleitungen 19, 20, 21 stehen die Backräume 2, 3, 4 mit einer Haupt-Abführleitung 22 des Verbrennungsgas-Kreislaufs 8 in Fluidverbindung. In den Backraum-Abführleitungen 19 bis 21 ist wiederum jeweils eine abführseitige Backraum-Absperrklappe 23, 24, 25 zum Absperren einer Verbrennungsgasführung zwischen den Backräumen 2 bis 4 und der Haupt-Abführleitung 22 angeordnet.

Die Haupt-Abführleitung 22 steht wiederum mit dem Brenner-Gehäuseabschnitt 9 in Fluidverbindung, sodass der Verbrennungsgas-Kreislauf 8 geschlossen ist.

Auch die Unterhitze-Steinplatte 6 ist im jeweiligen Backraum 2 bis 4 so angeordnet, dass sowohl ihre Oberseite, also die dem jeweiligen Backraum 2 bis 4 zugewandte Plattenseite, als auch ihre Unterseite vom Verbrennungsgas umströmt werden kann. Hierzu sind Kanalabschnitte 26, 27, 28 vorgesehen, in die das Verbrennungsgas strömen kann.

In der Haupt-Abführleitung 22 ist ein Umwälz-Ventilator 29 zum Führen der Verbrennungsgase durch den Verbrennungsgas-Kreislauf 8 angeordnet. Bei dem Umwälz-Ventilator 29 kann es sich um einen Axial- und/oder einen Radiallüfter handeln. Der Umwälz-Ventilator 29 ist im Strömungsweg der Verbrennungsgase im Verbrennungsgas-Kreislauf 8 zwischen den Backräumen 2 bis 4, also in der Haupt-Abführleitung 22 nach Einmündung der Backraum-Abführleitung 21, einerseits und der Mündung des Abluftkamins 30 andererseits in den Verbrennungsgas-Kreislauf 8 angeordnet.

Benachbart zum Verbrenner-Gehäuseabschnitt 9 mündet aus der Haupt-Abführleitung 22 ein Abluftkamin 30 zum Abführen von Abgasen aus dem Verbrennungsgas-Kreislauf 8 aus.

Im Abluftkamin 30 ist im Bereich einer Ausmündung des Abluftkamins 30 aus dem Verbrennungs-Kreislauf 8 eine verstellbare Drosselklappe 31 angeordnet. Die Drosselklappe 31 ist steuerbar ausgeführt und kann über einen in der Figur schematisch dargestellten Stellantrieb 32 zwischen verschiedenen Drosselstellungen verstellt werden. Diese Verstellung kann kontinuierlich oder diskret erfolgen. Mithilfe der steuerbar verstellbaren Drosselklappe 31 können zur Vorgabe eines Unterdrucks im Verbrennungsgas-Kreislauf 8 verschiedene Drosselklappenstellungen angefahren werden.

Bei einer Variante des Backofens 1 ist im Verbrennungsgas-Kreislauf 8 ein Drucksensor 33 angeordnet. Die Figur zeigt beispielhaft eine Positionierung des Drucksensors 33 benachbart zur Ausmündung des Abluftkamins 30 und zur Drosselklappe 31. Bei Einsatz eines derartigen Drucksensors 33 ist auch eine geregelte Ausführung der Drosselklappe 31 möglich. In diesem Fall stehen die Drosselklappe 31 einerseits und der Drucksensor 33 andererseits zur Druckregelung im Verbrennungsgas-Kreislauf 8 mit einer zentralen Steuer-/Regeleinrichtung 34 des Backofens in Signalverbindung, die in der Figur ebenfalls schematisch angedeutet ist.

Beispielhaft ist ein Weg der Verbrennungsgase durch den Verbrennungsgas-Kreislauf 8 in der Figur durch Pfeile verdeutlicht. Auch eine Frischluftzufuhr durch den Frischluftkanal 11 und eine Abluftabfuhr durch den Abluftkamin 30 ist durch entsprechende Pfeile in der Figur verdeutlicht.

Die Kreislaufführung der Verbrennungsgase erhöht einer Energieeffizienz des holzbefeuerten Backofens 1.

Der Brenner 7 ist in seiner Leistung variabel. Über die Steuer-/Regeleinrichtung 34 und ein entsprechendes Softwareprogramm kann die Leistung des Brenners 7 insbesondere an eine Teigling-Auslastung des Backofens 1 angepasst werden. Je nachdem, ob einer der drei Backräume 2 bis 4 ob alle drei Backräume 2 bis 4 zum Backen genutzt werden, wird eine entsprechende Leistung des Brenners 7 vorgegeben. Die nicht zum Backen genutzten Backräume können dann durch Verschließen der jeweiligen zuführseitigen und/oder abführseitigen Backraum-Absperrklappen vom Verbrennungsgas-Kreislauf abgekoppelt werden.

Über einen Bypass-Kanal 35 steht die Haupt-Zuführleitung 12 direkt, also nicht über die Backräume 2 bis 4, mit der Haupt-Abführleitung 22 in Fluidverbindung. Im Bypass-Kanalabschnitt 35 ist eine Bypass-Absperrklappe 36 angeordnet, die manuell oder über einen nicht dargestellten Stellmotor zwischen einer Offenstellung und einer Absperrstellung verstellt werden kann.

Die Absperrklappen 16 bis 18 sowie 23 bis 25 und auch 36 können manuell oder über nicht dargestellte Stellantriebe zwischen einer jeweiligen Offenstellung und einer jeweiligen Absperrstellung verstellt werden. Auch Zwischenstellungen der Klappen 16 bis 18 und/oder 23 bis 25 und/oder 36 sind zur Feineinstellung von Strömungsverhältnissen im Verbrennungsgas-Kreislauf 8 möglich.

Aufgrund einer Unterdruckeinstellung im Verbrennungsgas-Kreislauf 8 über die Drosselklappe 31 gelangen entsprechend geringe Mengen von Verbrennungsgas in den Abluftkamin 30, die dann durch Zufuhr von Frischluft über den Frischluftkanal 11 ersetzt werden. Hierdurch ist eine hohe Energieeffizienz während der Aufheizphase des holzbefeuerten Backofens 1 gewährleistet.

## Patentansprüche

1. Holzbefeuerter Backofen (1)
- mit mindestens einem Backraum (2 bis 4) mit mindestens einer Oberhitze-Steinplatte (5) und mindestens einer Unterhitze-Steinplatte (6),
- mit einem holzbefeuerten Brenner (7) zum Aufheizen der Steinplatten (5, 6) über Verbrennungsgase während mindestens einer Aufheizphase,
- mit einem Verbrennungsgas-Kreislauf (8), über den die Verbrennungsgase vom Brenner (7) hin zum Backraum (2 bis 4) und von diesem zurück zum Brenner (7) geführt werden,
- mit einem Umwälz-Ventilator (29) zum Führen der Verbrennungsgase durch den Verbrennungsgas-Kreislauf (8),
- mit einem Abluftkamin (30) zum Abführen von Abgasen aus dem Verbrennungsgas-Kreislauf (8).

2. Backofen nach Anspruch 1, **dadurch gekennzeichnet, dass** der Umwälz-Ventilator (29) im Verbrennungsgas-Kreislauf (8) zwischen dem Backraum (2 bis 4) und einer Mündung des Abluftkamins (30) in den Verbrennungsgas-Kreislauf (8) angeordnet ist.

3. Backofen nach Anspruch 1 oder 2, **gekennzeichnet durch** eine verstellbare Drosselklappe (31) im Abluftkamin (30).

4. Backofen nach Anspruch 3, **dadurch gekennzeichnet, dass** die Drosselklappe (31) steuerbar ausgeführt ist.

5. Backofen nach Anspruch 4, **dadurch gekennzeichnet, dass** die Drosselklappe (31) mit einem Drucksensor (33) in Signalverbindung steht, der zur Messung eines Verbrennungsgas-Drucks im Verbrennungsgas-Kreislauf (8) ausgeführt ist.

6. Backofen nach einem der Ansprüche 1 bis 5, **gekennzeichnet durch** eine Mehrzahl von Etagen-Backräumen (2 bis 4), wobei einzelnen oder allen der Backräume (2 bis 4) jeweils mindestens eine steuerbare Absperrklappe (16 bis 18, 23 bis 25) zum Absperren einer Verbrennungsgasführung durch den jeweiligen Backraum (2 bis 4) zugeordnet ist.

7. Backofen nach einem der Ansprüche 4 bis 6, **dadurch gekennzeichnet, dass** die Drosselklappe (31) und/oder die Absperrklappe (16 bis 18, 23 bis 25) mit einer Steuer-Regeleinrichtung (34) des Backofens in Signalverbindung stehen.

8. Backofen nach einem der Ansprüche 1 bis 7, **gekennzeichnet durch** eine Verbrennungsgas-Führung in mindestens einem Backraum (2 bis 4), die die Verbrennungsgase auf einem Führungs-Hinweg über eine Hinweg-Plattenseite mindestens einer der Steinplatten (5) und auf einem Führungs-Rückweg über eine Rückweg-Plattenseite dieser Steinplatte (5) führt, die der Hinweg-Plattenseite gegenüberliegt.
